# EUROPÄISCHE PATENTSCHRIFT

(11) **EP 1 079 161 B1**
(45) Veröffentlichungstag und Bekanntmachung des Hinweises auf die Patenterteilung: **15.12.2004**
(21) Anmeldenummer: 00115442.6
(22) Anmeldetag: 18.07.2000
(51) Int. Cl.: F16K 47/02

(54) **Anordnung zur Verhinderung unerwünschter Drücke beim Absperren oder Drosseln der Flüssigkeitsförderung in einer Rohrleitung**
Device for avoiding unwanted pressures in a pipeline when shutting off or throttling the fluid supply
Dispositif pour éviter les pressions non désirées dans un conduit par la coupure ou l'étranglement de l'alimentation en fluide

(30) Priorität: 24.08.1999 DE 19940096
(43) Veröffentlichungstag der Anmeldung: 28.02.2001
(73) Patentinhaber: Forschungszentrum Rossendorf e.V., 01328 Dresden (DE); Fraunhofer-Gesellschaft zur Förderung der angewandten Forschung e.V., 80686 München (DE)
(72) Erfinder: Prasser, Horst-Michael, Dr., 01324 Dresden (DE); Schlüter, Stefan, Dr., 46117 Oberhausen (DE); Dudlik, Andreas, 45219 Essen (DE)

(56) Entgegenhaltungen:
- CH-A- 186 625
- US-A- 5 301 716
- US-A- 5 377 952

## Beschreibung

Die Erfindung betrifft eine Anordnung zur Verhinderung unerwünschter Drücke, die bei schnellen Stellvorgängen von Armaturen, insbesondere bei schnellen Absperr- oder Drosselvorgängen in flüssigkeitsfördernden Rohrleitungen durch die Betätigung von schnellwirkenden Ventilen bzw. Klappen (Absperrarmatur) auftreten, wenn kurz nach dem Betätigen der Armatur die in Bewegung befindliche Flüssigkeitssäule abgebremst wird. Stromaufwärts der Armatur steigt infolge der Abbremsung der Förderflüssigkeit der Druck rasch an. Es kommt zu einem Druckstoß, der eine Belastung für die Rohrleitung, deren Lagerung sowie für die Armatur selbst darstellt. Stromabwärts sinkt der Druck. Wenn dabei der Dampfdruck der Flüssigkeit unterschritten wird, kommt es zur Herausbildung einer Kavitationsblase, die anschließend wieder kollabiert, was wiederum zu Druckstößen, sog. Kavitationsschlägen, führt. In einigen Fällen, z.B. bei Verwendung bestimmter Rohrleitungsmaterialien, ist eine untere Grenze für den zulässigen Druck vorgegeben, die beim Absperr- oder Drosselvorgang unterschritten werden kann.

In vielen technischen Anwendungen ist ein möglichst rasches Absperren oder Drosseln von Flüssigkeitsströmungen in Rohrleitungen erforderlich. Beispiele sind Leitungen zum Fördern von flüssigen Stoffen in chemischen Anlagen von einem Verfahrensschritt zum anderen, Anlagen zum Abfüllen umweltgefährdender Flüssigkeiten in Tanks, Tankwagen oder Tankschiffe oder Getränke-Abfüllanlagen. Schnellwirkende Absperrarmaturen werden auch vorgesehen, um im Fall eines Leitungsbruchs die Menge des aus dem Leck austretenden Mediums zu begrenzen und eine Ausweitung der Störung zu verhindern.

Druckstöße werden meist durch die feste Einstellung einer verringerten Schließ- bzw. Drosselgeschwindigkeit der Armatur vermindert. Erfahrungsgemäß kann hierdurch der Druckstoß auf der Zulaufseite nur dann beherrscht werden, wenn die Anlagen- und Betriebsbedingungen der Rohrleitung den Einstellparametern der Armatur entsprechen. Weiterhin ist es schwierig, einen Kavitationsschlag stromabwärts der Absperrarmatur durch Verringerung der Schließ- bzw. Drosselgeschwindigkeit zu verhindern, weil eine Kavitationsblase hinter der Armatur auch bei größeren Schließ- bzw. Drosselzeiten entstehen kann, insbesondere wenn die Rohrleitung sehr lang ist (Thorley, A. R. D., "Fluid Transients in Pipeline Systems", D & L George LTD, 1991, Hadley Wood, Bamet, GB). Damit steht eine von vorn herein fest eingestellte, verminderte Schließ- bzw. Drosselgeschwindigkeit in den meisten Fällen der Forderung entgegen, die Rohrleitung auch unter wechselnden Betriebs- und Anlagenbedingungen jeweils in kürzestmöglicher Zeit abzusperren und kann deshalb oft nicht zur Verhinderung von Druckstößen und Kavitationsschlägen angewandt werden.

Eine Möglichkeit zur Verhinderung von Druckstößen stromaufwärts der Schließ- bzw. Drosselarmatur ist das schnelle Abführen des Transportmediums in einen anderen Leitungsabschnitt, der bei Erreichen eines Grenzwertes von Druck oder Massenstrom geöffnet wird (DD-PS 211615). Ein ähnliches Verfahren wird von Gustavsson für die Vermeidung von Druckstößen in Fernwärmeleitungen mit Vor- und Rücklauf verfolgt. Hierbei wird beim Schließen der Vor- und Rücklauf gekoppelt, so daß ein Druckanstieg verhindert wird (WO-PS 94/02775). Das Umlenken des Transportmediums mit anschließendem langsamen Schließen der Hauptarmatur ist auch bekannt (DD-OS 23 46 754). Nachteilig an den letztgenannten Erfindungen ist, daß neben einem hohen meßtechnischen Aufwand zusätzliche Leitungsabschnitte und/oder Pufferbehälter in das Transportleitungssystem integriert werden müssen.

Eine weitere Möglichkeit besteht in der Messung und Begrenzung des Leitungsdrucks oder der Druckanstiegsgeschwindigkeit durch ein schnelles Druckmeß- und regelsystem. Der schnelle Regler unterbricht beim Überschreiten eines Maximaldrucks oder einer maximalen Druckanstiegsgeschwindigkeit den Schließ- bzw. Drosselvorgang der Armatur (DD-PS 201 041). Dieses Vorgehen stellt höchste Ansprüche an die Meß- und Regeltechnik. Darüber hinaus muß der Antrieb der Schließ- bzw. Drosselarmatur in sehr engen Zeitgrenzen von einigen Millisekunden in der Lage sein, den Schließ- bzw. Drosselvorgang zu unterbrechen. Hierbei ist von hohen Entwicklungs- und Investitionskosten auszugehen.

Eine Möglichkeit zur Verhinderung speziell des Kavitationsschlages besteht in der Belüftung bzw. dem Einspeisen von anderen, nichtkondensierbaren Gasen in die Rohrleitung hinter der Absperrarmatur (Raschke, E., Salla, M., Hültenschmidt, W.: "Druckstoß gedämpft, Rohrleitung geschützt-Kondensationsschläge in Rohrleitungen unter dem dämpfenden Einfluß von Gasen", Verfahrenstechnik 7-8/97, S. 45-49). Zu diesem Zweck wird eine Belüftungsarmatur dicht hinter der Absperrarmatur angebracht, die beim Auftreten eines Unterdrucks hinter der Absperrarmatur selbsttätig öffnet und eine bestimmte Menge Luft in die Transportleitung gelangen läßt. Dabei wird davon ausgegangen, daß der Unterdruck infolge Anwesenheit einer Kavitationsblase auftritt. Die einströmende Luft führt zum teilweisen Abbau des Unterdrucks in der Kavitationsblase. Außerdem wird durch die Anwesenheit der Luft die Kondensationsgeschwindigkeit des Dampfes während der Phase der Rückströmung der Flüssigkeit stark vermindert. Als drittes verbleibt nach vollständiger Kondensation des Dampfes eine Luftblase in der Leitung, die durch ihre Kompressibilität den Druckstoß dämpft. Alle drei genannten Effekte führen zu einer Verminderung der Druckspitzen beim Kavitationsschlag. In der Praxis kann Luft häufig nicht verwendet werden, weil sie mit der Flüssigkeit reagiert bzw. diese unzulässig verunreinigt. In diesen Fällen kommen andere, mit der Flüssigkeit nicht in Reaktion tretende Gase zum Einsatz. Nachteilig ist in jedem Fall, daß durch die Einspeisung die zu transportierenden Flüssigkeit verunreinigt wird.

Weiterhin besteht die Möglichkeit, durch den Einbau von Windkesseln vor bzw. hinter der Absperrarmatur die Druckstöße zu mindern. Vor der Armatur schafft der Windkessel ein Volumen zur Aufnahme von Flüssigkeit, wodurch die Abbremsung der Flüssigkeitssäule langsamer verläuft und die Druckspitze abgemindert wird. Ein Windkessel hinter der Absperrarmatur liefert Volumen nach, so daß die Herausbildung der Kavitationsblase behindert wird (Raschke, E., Seelinger, A., Sperber, A., Straßburger, A.: "Simulation des instationären hydraulischen Verhaltens verfahrenstechnischer Anlagen mit langen Rohrleitungen", CIT 66 (1994) 5, S. 652-660). In beiden Fällen sind Windkessel bei Normalbetrieb teilweise mit der zu transportierenden Flüssigkeit gefüllt, über der sich ein Gaspolster befindet. Nachteilig ist, daß der Windkessel zusätzlichen Raum beansprucht und daß Löslichkeit des Gases in der Flüssigkeit im Windkessel zu einer Verunreinigung der zu transportierenden Flüssigkeit in der Rohrleitung führt. Außerdem müssen die Gasverluste durch dessen Löslichkeit durch Nachspeisen ausgeglichen werden.

Es wurde bereits vorgeschlagen, zur Verhinderung eines Kavitationsschlages die Rohrleitung in Fließrichtung hinter der Absperrarmatur mit einer Hilfsarmatur zu versehen, deren Antrieb über Schwellwertschalter und Strömungssensor mit der Rohrleitung verbunden ist (Deutsche Patentanmeldung, Aktenzeichen 198 15 242.6). Als Hilfsarmatur kann auch ein Rückflußverhinderer dienen. Die Hilfsarmatur verhindert, daß die Kavitationsblase kollabieren kann. Sie verhindert jedoch nicht das Absinken des Drucks stromabwärts der Absperrarmatur auf Dampfdruckniveau. In vielen Fällen ist jedoch das Unterschreiten eines bestimmten Grenzdrucks oberhalb des Dampfdrucks zu unterbinden, wie z.B. bei Verwendung von Rohrleitungen aus Verbundwerkstoffen, bei denen sich der Inliner ablösen kann. Außerdem wird durch die Hilfsarmatur zwar der Kavitationsschlag, nicht aber der Druckstoß vor der Absperrarmatur verhindert.

Es ist auch eine Absperreinrichtung an Druckwasserleitungen bekannt, bei der das Abschlussorgan mit einer Flüssigkeitsbremse verbunden ist, wobei diese von einem Druckrelais beherrscht ist, welches die Schließbewegung des Abschlussorgans in Abhängigkeit von der Strömung in der Druckleitung hemmt (CH 186 625).

Aufgabe der Erfindung ist es, eine Anordnung vorzuschlagen, mit der ein Schließ- oder Drosselvorgang der Absperrarmatur unabhängig von wechselnden Anlagen- und Betriebsbedingungen der Rohrleitung in kürzest möglicher Zeit erfolgt, ohne daß dabei ein vorgegebener Druck in der Rohrleitung überschritten wird bzw. daß stromabwärts von der Absperrarmatur ein Druckabfall unter einen vorgegebenen Grenzwert verhindert wird. Die Anordnung soll ohne eine Einspeisung von Luft oder anderen Gasen in die Rohrleitung auskommen, um die Verunreinigung der Förderflüssigkeit auszuschließen. Aufwendige Einrichtungen, wie Windkessel, komplizierte Regeleinrichtungen für die Schließ- bzw. Drosselarmatur und umfangreiche Installationen für die Umlenkung der Transportflüssigkeit sollen vermieden werden.

Erfindungsgemäß wird die Aufgabe durch die in den Patentansprüchen aufgeführten Merkmale gelöst.

Die Verhinderung eines unerwünschten Druckanstiegs geschieht durch das Vermindern der Schließ- bzw. Drosselgeschwindigkeit der Absperrarmatur mit Hilfe einer hydraulischen Bremse, die auf das Antriebsgestänge wie Drehachse, Spindel oder Hubstange der Absperrarmatur wirkt, und vom Druck der Transportflüssigkeit unmittelbar stromaufwärts der Absperrarmatur betätigt wird. Beim Ansteigen des Drucks zieht die Bremse an und der Schließvorgang wird verlangsamt. Fällt der Druck wieder ab, löst sich die Bremse und der Schließ- bzw. Drosselvorgang setzt sich fort.

Für die Begrenzung des Druckabfalls stromabwärts der Absperrarmatur wird eine Bremse verwendet, die mit der Förderflüssigkeit unmittelbar stromabwärts der Absperrarmatur verbunden ist. Die Bremse, die ebenfalls auf das Antriebsgestänge, also die Drehachse, die Spindel oder die Hubstange der Absperrarmatur wirkt, wird so geschaltet, daß eine Druckabnahme zum Anziehen der Bremse und somit zur Verlangsamung des Schließ- bzw. Drosselvorgangs führt. Steigt der Druck wieder an, löst sich die Bremse und der Schließ- bzw. Drosselvorgang setzt sich fort.

Wenn die Förderung der Flüssigkeit in der Rohrleitung bei einem erhöhten Druck erfolgt, muß verhindert werden, daß die Bremse schon bei normalem Betriebsdruck anzieht bzw. daß der Betriebsdruck das geforderte Anziehen der Bremse bei Druckabnahme stromabwärts der Absperrarmatur stört. Für diesen Fall wird die hydraulische Bremse doppelt wirkend ausgeführt. Es wird eine Bremse verwendet, bei der der Bremszylinder über einen Plus- und einen Minuseingang verfügt und die Bremswirkung durch die Druckdifferenz zwischen den beiden Eingängen bestimmt wird. Der Pluseingang des Bremszylinders wird mit der Rohrleitung unmittelbar stromaufwärts der Absperrarmatur verbunden, während der Minuseingang unmittelbar stromabwärts der Absperrarmatur an die Rohrleitung angeschlossen ist. Bei normalem Betrieb ist der Druckunterschied zwischen Plus- und Minuseingang zu gering, um einen Bremsvorgang auszulösen. Die Wirkung der Bremse ist vom Betriebsdruck unabhängig. Bei Betätigung der Absperrarmatur steigt der Druck am Pluseingang an, während er am Minuseingang abfällt, wodurch eine Bremswirkung auftritt.

Wenn der Druckanstieg infolge der Abbremsung der Förderflüssigkeit bei Betätigung der Absperrarmatur nicht ausreicht, um die erforderliche Bremskraft zu erreichen, die zu einer Verzögerung des Schließ- bzw. Drosselvorgangs führt, soll ein Bremskraftverstärker in die Verbindungsleitung zwischen Rohrleitung und Bremse eingebaut werden. Das gleiche gilt für den Fall, daß der Abfall des Drucks stromabwärts der Absperrarmatur nicht ausreicht, um den Bremsvorgang auszulösen. Es können ebenfalls Bremskraftverstärker vorgesehen werden, wobei die Höhe der Drücke in der Plus- und der Minusleitung einzeln verstärkt werden können, jedoch auch eine Verstärkung des Differenzdrucks angewandt werden kann.

In vielen Fällen ist es nicht wünschenswert, wenn die Förderflüssigkeit in die hydraulische Bremse oder die Bremskraftverstärker gelangt. Dies ist insbesondere dann der Fall, wenn Korrosion, Abrasion oder eine Verstopfung auftreten können. Es kann die Bremse mit einer gesonderten Bremsflüssigkeit betrieben werden und die Druckübertragung von der Förderflüssigkeit auf die Bremsflüssigkeit durch eine elastische Membran erfolgen, die beide Flüssigkeiten voneinander trennt.

Nachfolgend wird die Erfindung an drei Ausführungsbeispielen näher erläutert.

In der zugehörigen Zeichnung zeigt
Figur 1 die erfindungsgemäße Anordnung mit einer Membran,
Figur 2 die erfindungsgemäße Anordnung mit einem Bremskraftverstärker,
Figur 3 die Anordnung nach Figur 2 mit einer zusätzlichen Verbindungsleitung.

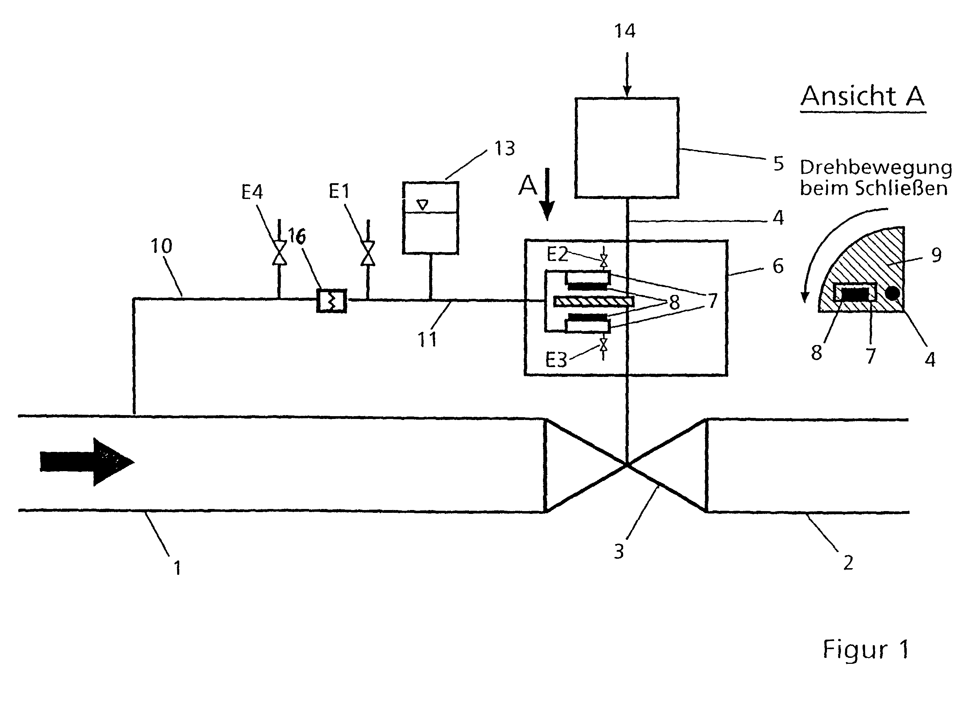

Nach Figur 1 in ihrer Ausführung mit der Rohrleitung stromaufwärts 1 und stromabwärts 2 der Absperrarmatur 3, in der die Flüssigkeit in Fließrichtung (Pfeil) strömt, mit dem Antriebsgestänge 4 als Antriebswelle, dem Antrieb 5, der hydraulischen Bremse 6 als Scheibenbremse, deren Bremszylindern 7, den Bremsbacken 8, der Bremsscheibe 9, den Verbindungsleitungen 10 und 11, der Membran 16 dem Bremsflüssigkeitsbehälter 13, dem Schließ- bzw. Drosselsignal 14, sowie den Entlüftungsarmaturen E1, E2, E3 und E4 steht die Transportflüssigkeit, die in der Rohrleitung 1 bzw. 2 durch die Absperrarmatur strömt, über eine Verbindungsleitung 10, die stromaufwärts nahe der Absperrarmatur 3 mit der Rohrleitung 1 verbunden ist, mit einer elastischen Membran 16 in Verbindung. Der Druck der Förderflüssigkeit wird über die Membran 16 an die Bremsflüssigkeit in der Verbindungsleitung 11 übertragen und steht in den Bremszylindern 7 an. Wenn das Schließ- bzw. Drosselsignal 14 aktiviert wird, führt der Antrieb 5 eine Drehbewegung der Antriebswelle 4 aus, die zum Schließen bzw. Drosseln der Absperrarmatur 3 führt. Durch die Abbremsung der Förderflüssigkeit steigt der Druck in der Leitung 1 an. Der Druckanstieg überträgt sich über die Verbindungsleitungen 10 und 11 sowie die Membran 16 auf die Bremszylinder 7, wodurch die Bremsbacken 8 an die Bremsscheibe 9 angepreßt werden. Die Drehbewegung der Antriebswelle 4 wird dadurch verzögert, bis der Druck in der Rohrleitung 1 wieder abfällt. Dadurch wird gewährleistet, daß der Druck in der Rohrleitung 1 einen Maximaldruck nicht überschreiten kann.

Voraussetzung für die einwandfreie Funktion der Anordnung ist, daß die Leitungen 10, 11 und die Bremszylinder 7 über die Entlüftungsventile E1 - E4 einwandfrei entlüftet werden. Wenn die Art der Förderflüssigkeit es gestattet, daß diese in die Bremszylinder gelangen darf, ohne unerwünschte Korrosions-, Abrasions- oder Verstopfungseffekte hervorzurufen, kann auf die Membran 16 verzichtet werden.

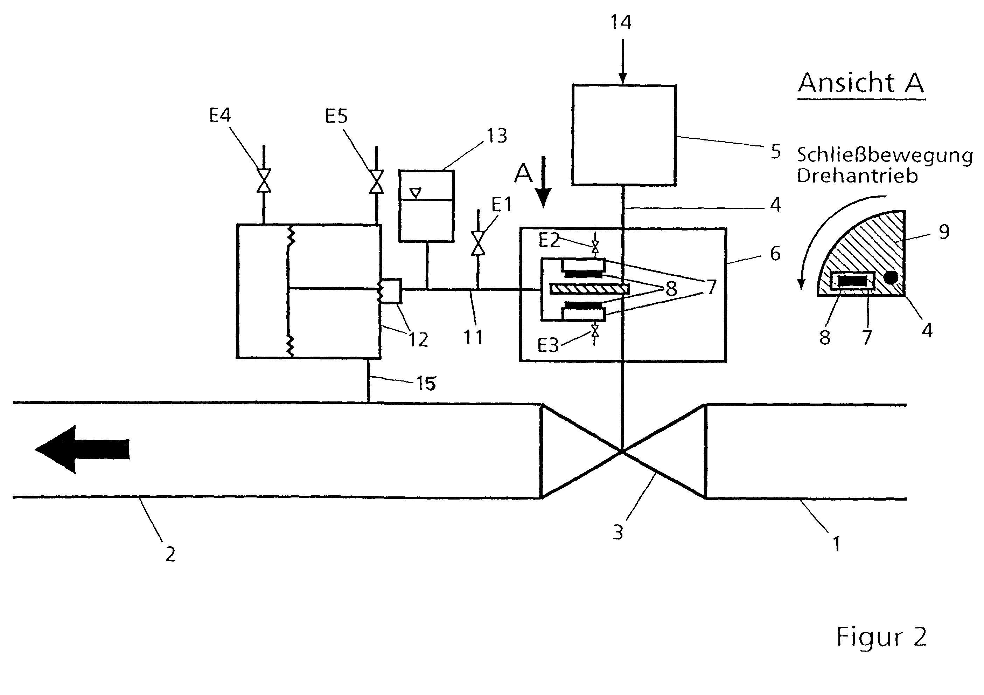

Nach Figur 2 in ihrer Ausführung mit der Rohrleitung stromaufwärts 1 und stromabwärts 2 der Absperrarmatur 3, in der die Flüssigkeit in Fließrichtung (Pfeil) strömt, mit der Antriebswelle 4, dem Antrieb 5, der Scheibenbremse 6, deren Bremszylindern 7, den Bremsbacken 8, der Bremsscheibe 9, den Verbindungsleitungen 15 und 11, dem Bremskraftverstärker 12 dem Bremsflüssigkeitsbehälter 13, dem Schließ- bzw. Drosselsignal 14, sowie den Entlüftungsarmaturen E1, E2, E3, E4 und E5 steht die Transportflüssigkeit, die in der Rohrleitung 1 bzw. 2 durch die Absperrarmatur 3 strömt, über eine Verbindungsleitung 15, die stromabwärts nahe der Absperrarmatur 3 mit der Rohrleitung 2 verbunden ist, mit dem Bremskraftverstärker 12 in Verbindung. Der Druck der Förderflüssigkeit wird über den Bremskraftverstärker 12 an die Bremsflüssigkeit in der Verbindungsleitung 11 übertragen und steht in den Bremszylindern 7 an. Wenn das Schließ- bzw. Drosselsignal 14 aktiviert wird, führt der Antrieb 5 eine Drehbewegung der Antriebswelle 4 aus, die zum Schließen bzw. Drosseln der Absperrarmatur 3 führt.

Durch die Abbremsung der Förderflüssigkeit fällt der Druck in der Leitung 2 ab. Der Druckabfall überträgt sich über die Verbindungsleitungen 15 und 11 sowie den Bremskraftverstärker 12 auf die Bremszylinder 7, wodurch die Bremsbacken 8 an die Bremsscheibe 9 angepreßt werden. Die Drehbewegung der Antriebswelle 4 wird dadurch verzögert, bis der Druck in der Rohrleitung 2 wieder ansteigt. Dadurch wird gewährleistet, daß der Druck in der Rohrleitung 2 einen Minimaldruck nicht unterschreiten kann.

Voraussetzung für die einwandfreie Funktion der Anordnung ist, daß die Leitungen 15, 11, der Bremskraftverstärker 12 und die Bremszylinder 7 über die Entlüftungsventile E1 - E5 einwandfrei entlüftet werden. Der Bremskraftverstärker 12 ist in diesem Ausführungsbeispiel mit elastischen Membranen nach Anspruch 5 ausgestattet.

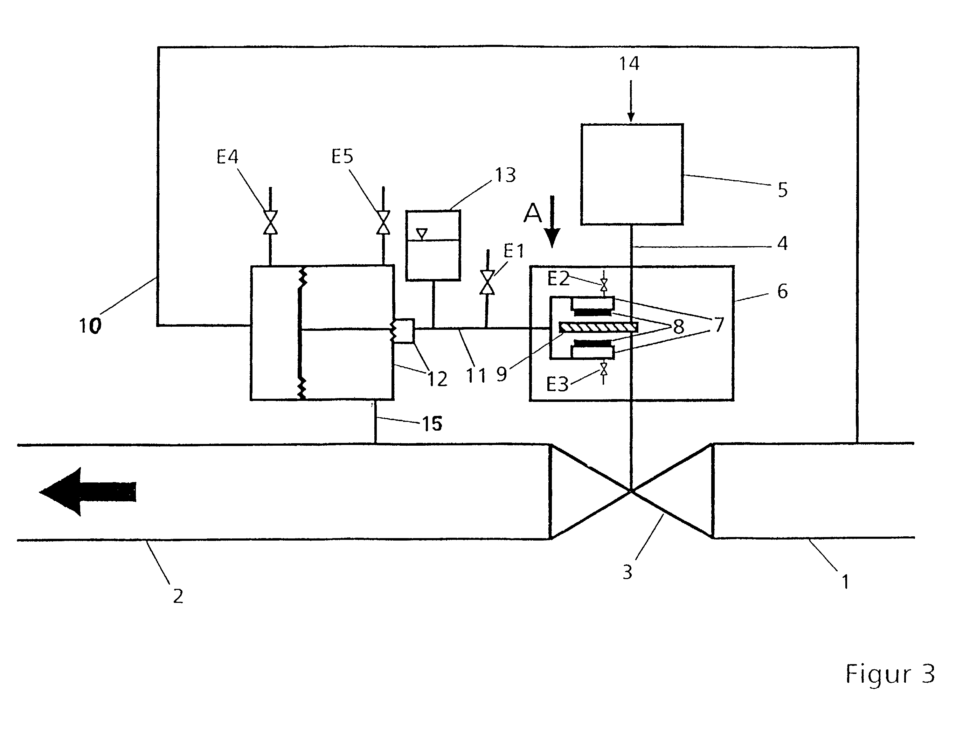

Nach Figur 3 in ihrer Ausführung mit der Rohrleitung stromaufwärts 1 und stromabwärts 2, der Absperrarmatur 3, in der die Flüssigkeit in Fließrichtung (Pfeil) strömt, mit der Antriebswelle 4, dem Antrieb 5, der Scheibenbremse 6, deren Bremszylindern 7, den Bremsbacken 8, der Bremsscheibe 9, den Verbindungsleitungen 10 und 11, dem Bremskraftverstärker 12, dem Bremsflüssigkeitsbehälter 13, dem Schließ- bzw. Drosselsignal 14, der Verbindungsleitung 15 sowie den Entlüftungsarmaturen E1, E2, E3, E4 und E5 steht die Transportflüssigkeit, die in der Rohrleitung 1 bzw. 2 durch die Absperrarmatur strömt, über eine Verbindungsleitung 15, die stromabwärts nahe der Absperrarmatur 3 mit der Rohrleitung 2 verbunden ist, sowie über eine Verbindungsleitung 10, die stromaufwärts nahe der Absperrarmatur 3 mit der Rohrleitung 1 verbunden ist, mit dem Bremskraftverstärker 12 in Verbindung. Die Verbindungsleitung 10 ist an den Pluseingang und die Verbindungsleitung 15 an den Minuseingang des Bremskraftverstärkers 12 angeschlossen. Die Druckdifferenz der Förderflüssigkeit über der Absperrarmatur 3 wird durch den Bremskraftverstärker 12 verstärkt, an die Bremsflüssigkeit in der Verbindungsleitung 11 übertragen und steht in den Bremszylindern 7 an. Bei geöffneter Absperrarmatur ist die Druckdifferenz klein, so daß ein unerwünschtes Ansprechen der Scheibenbremse 6 allein durch den Normaldruck in der Rohrleitung 1 und 2 verhindert wird. Wenn das Drosselsignal 14 aktiviert wird, führt der Antrieb 5 eine Drehbewegung der Antriebswelle 4 aus, die zum teilweisen Schließ- bzw. Drosseln der Absperrarmatur 3 führt. Durch die Abbremsung der Förderflüssigkeit fällt der Druck in der Leitung 2 ab bzw. steigt der Druck in der Leitung 1, das bedeutet, daß die Druckdifferenz und damit der Druck in Verbindungsleitung 11 und in den Bremszylindern 7 zunimmt, wodurch die Bremsbacken 8 an die Bremsscheibe 9 angepreßt werden. Die Drehbewegung der Antriebswelle 4 wird dadurch verzögert, bis die Druckdifferenz wieder unter den Schwellwert abgesunken ist. Durch die Anordnung wird gewährleistet, daß die Druckdifferenz in der Rohrleitung über der Absperrarmatur 3 nicht zu groß werden kann.

Voraussetzung für die einwandfreie Funktion der Anordnung ist, daß die Leitungen 10, 11 und 15, der Bremskraftverstärker 12 und die Bremszylinder 7 über die Entlüftungsventile E1 - E5 einwandfrei entlüftet werden. Der Bremskraftverstärker 12 ist in diesem Ausführungsbeispiel mit elastischen Membranen nach gemäß Anspruch 5 ausgestattet.

## Patentansprüche

1. Anordnung zur Verhinderung eines unerwünscht hohen Drucks beim Absperren oder Drosseln der Flüssigkeitsförderung stromaufwärts einer Absperrarmatur (3) in Form einer Absperrklappe, mit der die Flüssigkeitsförderung in einer Rohrleitung (1,2) abgesperrt oder gedrosselt wird, enthaltend eine Antriebswelle (4) und einen Antrieb (5), **dadurch gekennzeichnet, daß** an dem Antriebswelle (4) der Absperrarmatur (3) eine hydraulisch betätigte Scheiben bremse (6) angebracht ist und daß der Bremszylinder (7) der Bremse (6) über eine Verbindungsleitung (10) stromaufwärts nahe der Absperrarmatur (3) an die Rohrleitung (1) angeschlossen ist.

2. Anordnung zur Verhinderung eines unerwünscht niedrigen Drucks beim Absperren oder Drosseln der Flüssigkeitsförderung stromaufwärts einer Absperrarmatur (3) in Form einer Absperrklappe, mit der die Flüssigkeitsförderung in einer Rohrleitung (1,2) abgesperrt oder gedrosselt wird, enthaltend eine Antriebswelle (4) und einen Antrieb (5), **dadurch gekennzeichnet, daß** an dem Antriebswelle (4) der Absperrarmatur (3) eine hydraulisch betätigte Scheiben bremse (6) angebracht ist und daß der Bremszylinder (7) der Bremse (6) über eine Verbindungsleitung (15) stromabwärts nahe der Absperrarmatur (3) an die Rohrleitung (2) angeschlossen ist.

3. Anordnung zur Verhinderung eines unerwünscht hohen Drucks oder eines unerwünscht niedrigen Drucks stromaufwärts bzw. stromabwärts einer Absperrarmatur (3) in Form einer Absperrklappe beim Absperren oder Drosseln der Flüssigkeitsförderung in einer Rohrleitung (1,2), enthaltend ein Antriebswelle (4) and einen Antrieb (5),
**dadurch gekennzeichnet,**
**daß** an dem Antriebswelle (4) der Absperrarmatur (3) eine hydraulisch betätigte Scheibenbremse (6) angebracht ist,
**daß** der Bremszylinder (7) der Bremse über eine Verbindungsleitung (10) stromaufwärts nahe der Absperrarmatur (8) an die Rohrleitung (1) und über eine andere Verbindungsleitung (15) stromabwärts nahe der Absperrarmatur (8) an die Rohrleitung (2) stromabwärts angeschlossen ist, wobei die hydraulisch betätigte Scheibenbremse (6) doppelt wirkend ausgeführt ist, deren Bremswirkung durch die Druckdifferenz zwischen einem Plus- und einem Minuseingang bestimmt wird und
**daß** der Pluseingang des Bremszylinders (7) über die Verbindungsleitung (10) mit der Rohrleitung (1) stromaufwärts nahe der Absperrarmatur (3) und der Minuseingang über die Verbindungsleitung (15) mit der Rohrleitung (2) stromabwärts nahe der Absperrarmatur (3) verbunden ist.

4. Anordnung nach Anspruch 1, **dadurch gekennzeichnet, daß** ein Bremskraftverstärker (12) zwischen den Bremszylinder (7) und die Rohrleitung (1) eingebaut ist.

5. Anordnung nach Anspruch 2, **dadurch gekennzeichnet, daß** ein Bremskraftverstärker (12) zwischen Bremszylinder (7) und Rohrleitung (2) eingebaut ist.

6. Anordnung nach Anspruch 3, **dadurch gekennzeichnet, daß** ein Bremskraftverstärker (12) zwischen Bremszylinder (7) und Rohrleitungen (1) und (2) eingebaut ist.

7. Anordnung nach den Ansprüchen 1 bis 6, **dadurch gekennzeichnet, daß** eine elastische Membran (16) in die Verbindungsleitung (10) oder (15) eingebaut ist und die Verbindungsleitungen zwischen Membran (16) und Bremszylinder (7) mit einer von der Förderflüssigkeit verschiedenen Bremsflüssigkeit gefüllt sind.

## Claims

1. A device for avoiding an undesirably high pressure when shutting off or throttling a fluid supply upstream of an isolation valve (3), in the form of a shut-off plate with which the fluid supply in a pipeline is shut off or throttled, and which includes a drive shaft (4) and drive (5), **characterised by** a hydraulically actuated disc brake (6) fitted to the drive shaft (4) of the isolation valve (3), and by the connection of the brake cylinder (7) of the brake (6) to the pipeline (1) by means of a connecting pipe (10) upstream and adjacent to the isolation valve (3).

2. A device for avoiding an undesirably low pressure when shutting off or throttling a fluid supply upstream of an isolation valve (3), in the form of a shut-off plate with which the fluid supply in a pipeline (1, 2) is shut off or throttled, and which includes a drive shaft (4) and drive (5), **characterised by** a hydraulically actuated disc brake (6) fitted to the drive shaft (4) of the isolation valve (3), and by the connection of the brake cylinder (7) of the brake (6) to the pipeline (2) by means of a connecting pipe (15) downstream and adjacent to the isolation valve (3).

3. A device for avoiding an undesirably high pressure or an undesirably low pressure upstream or downstream respectively of an isolation valve (3) when shutting off or throttling the fluid supply in a pipeline (1, 2), in the form of a shut-off plate, and including a drive shaft (4) and a drive (5), and **characterised:**
**by** a hydraulically actuated disc brake (6) fitted to the drive shaft (4) of the isolation valve (3),
by the connection of the brake cylinder (7) of the brake to the pipeline (1) by means of a connecting pipe (10) upstream and adjacent to the isolation valve (8), and a further connection of the brake cylinder (7) to the pipeline (2) downstream by means of another connecting pipe (15) downstream and adjacent to the isolation valve (8), in which the hydraulically actuated disc brake is built to be double acting, and its braking action is controlled through the pressure difference between a positive and a negative input,
and by the connection of the positive input of the brake cylinder (7) by a connecting pipe (10) to the pipeline (1) upstream and adjacent to the isolation valve (3) , and by the connection of the negative input by a connecting pipe (15) to the pipeline (2) downstream and adjacent to the isolation valve (3).

4. A device according to claim 1, **characterised by** the installation of a brake booster (12) between the brake cylinder (7) and the pipeline (1).

5. A device according to claim 2, **characterised by** the installation of a brake booster (12) between the brake cylinder (7) and the pipeline (2).

6. A device according to claim 3, **characterised by** the installation of a brake booster (12) between the brake cylinder (7) and the pipelines (1) and (2).

7. A device according to claims 1 to 6, **characterised by** the installation of an elastic membrane (16) in the connecting pipe (10) or (15), and by the filling of the connecting pipes between membrane (16) and brake cylinder (7) with a brake fluid different to the pipeline fluid.

## Revendications

1. Dispositif pour éviter une forte pression non désirée par la coupure ou l'étranglement de l'alimentation en fluide dans le sens du flux d'un appareil de robinetterie de coupure (3) se présentant sous la forme d'un clapet d'arrêt, avec lequel l'alimentation en fluide dans un conduit (1, 2) est coupée ou étranglée, comprenant un arbre d'entraînement (4) et un système d'entraînement (5), **caractérisé en ce qu'**un frein à disque à commande hydraulique (6) est monté sur l'arbre d'entraînement (4) de l'appareil de robinetterie de coupure (3) et **en ce que** le cylindre (7) du frein (6) est raccordé au conduit (1) par un conduit de raccordement (10) dans le sens du flux à proximité de l'appareil de robinetterie de coupure (3).

2. Dispositif pour éviter une faible pression non désirée par la coupure ou l'étranglement de l'alimentation en fluide dans le sens du flux d'un appareil de robinetterie de coupure (3) se présentant sous la forme d'un clapet d'arrêt, avec lequel l'alimentation en fluide dans un conduit (1, 2) est coupée ou étranglée, comprenant un arbre d'entraînement (4) et un système d'entraînement (5), **caractérisé en ce qu'**un frein à disque à commande hydraulique (6) est monté sur l'arbre d'entraînement (4) de l'appareil de robinetterie de coupure (3) et **en ce que** le cylindre (7) du frein (6) est raccordé au conduit (2) par un conduit de raccordement (15) dans le sens contraire du flux à proximité de l'appareil de robinetterie de coupure (3).

3. Dispositif pour éviter une forte pression non désirée ou une faible pression non désirée dans le sens du flux ou dans le sens contraire du flux d'un appareil de robinetterie de coupure (3) se présentant sous la forme d'un clapet d'arrêt par la coupure ou l'étranglement de l'alimentation en fluide dans un conduit (1, 2), comprenant un arbre d'entraînement (4) et un système d'entraînement (5), **caractérisé en ce qu'**un
frein à disque à commande hydraulique (6) est monté sur l'arbre d'entraînement (4) de l'appareil de robinetterie de coupure (3),
**en ce que** le cylindre (7) du frein est raccordé au conduit (1) par un conduit de raccordement (10) dans le sens du flux à proximité de l'appareil de robinetterie de coupure (8) et dans le sens contraire du flux au conduit (2) par un autre conduit de raccordement (15) dans le sens contraire du flux à proximité de l'appareil de robinetterie de coupure (8), sachant que le frein à disque à commande hydraulique (6) est un frein à double effet, dont la force de freinage est déterminée par la différence de pression entre une entrée plus et une entrée moins et
**en ce que** l'entrée plus du cylindre du frein (7) est reliée par le conduit de raccordement (10) avec le conduit (1) dans le sens du flux à proximité de l'appareil de robinetterie de coupure (3) et que l'entrée moins est reliée par le conduit de raccordement (15) avec le conduit (2) dans le sens contraire du flux à proximité de l'appareil de robinetterie de coupure (3).

4. Dispositif selon la revendication 1, **caractérisé en ce qu'**un intensificateur de force de freinage (12) est monté entre le cylindre du frein (7) et le conduit (1).

5. Dispositif selon la revendication 2, **caractérisé en ce qu'**un intensificateur de force de freinage (12) est monté entre le cylindre du frein (7) et le conduit (2).

6. Dispositif selon la revendication 3, **caractérisé en ce qu'**un intensificateur de force de freinage (12) est monté entre le cylindre du frein (7) et les conduits (1) et (2).

7. Dispositif selon les revendications 1 à 6, **caractérisé en ce qu'**une membrane élastique (16) est montée dans le conduit de raccordement (10) ou (15) et que les conduits de raccordement entre la membrane (16) et le cylindre du frein (7) sont remplis d'un liquide de freins différent du liquide d'alimentation.
